# EUROPEAN PATENT APPLICATION

(11) **EP 4 339 850 A1**
(43) Date of publication of application: **20.03.2024**
(21) Application number: 22195576.8
(22) Date of filing: 14.09.2022
(51) Int. Cl.: G06Q 10/00, G06Q 10/0631, G06Q 50/02

(54) **METHOD AND DEVICE FOR MANAGING AGRICULTURAL FIELD AREAS**

(71) Applicant: Yara International ASA, 0277 Oslo (NO)
(72) Inventor: Harriman, Miles, Grimsby, DN37 9TZ (GB)
(74) Representative: AWA Sweden AB

(57) **Abstract**

The current disclosure relates to a method and device for managing agricultural field areas, wherein at least a first display area and a second display area display a map of an agricultural area with respective map overlays such that different sub-areas within the agricultural field may be selected and indicated in order to allow the consideration of multiple parameters of the agricultural field when carrying out agricultural management practices or other farming related activities.

## Description

### Technical Field

The present disclosure relates to electronic devices and methods for management of agricultural field areas in order to support farmer's activities.

### Background

Decision supporting tools within the field of agriculture are supposed to guide and support the farmer in better decision making as well as into allowing further insights in the properties of agricultural fields. Field analysis tools available usually display application maps or prescription maps or a specific overlay over field maps which denote a specific characteristic of the agricultural fields. However, within an agricultural field, it is needed to observe several characteristics when determining management areas.

### Prior art

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

For example, patent document US 2018/0046735 A1 shows an example in which the field is analyzed and yield zones are delineated and displayed for the generation of management zones which the farmer can manage accordingly. However, the current document is only directed to the analysis of yield data.

Further, patent document US 2011/0295638 A1 shows an example of a graphical user interface where a field is displayed with a first characteristic and is able of registering work orders, displaying them on the graphical user interface.

### Summary

As discussed, the cited documents only allow the consideration of one field characteristic for providing the farmers with decision support and lack the flexibility to allow the user to manage specific zones based on a determined choice according to different field characteristics.

The current disclosure aims at providing solutions for the above-mentioned problems and at providing a method and devices which improves the farmers decision making process.

According to a first embodiment, this and other objectives are achieved by an electronic device for managing agricultural field areas, wherein the electronic device comprises a memory unit, at least one processor, an input unit or communication unit configured to receive field data and, a display unit being configured to display at least a first display area and a second display area, wherein the first display area and the second display area are configured to display a map of an agricultural field, wherein the first display area is configured to display a first map overlay comprising a first characteristic of the agricultural field based on the field data, and wherein the second display areas is configured to display second map overlay comprising a second characteristic of the agricultural field based on the field data; wherein the display unit is configured to display at least one field area in the first display area based on the first characteristic and wherein the display unit is configured to display at least one field area in the second display based on the second characteristic; an input unit configured to receive an input to select at least one sub-area in one of the first display area and the second display area; wherein the display unit is further configured to indicate the selected at least one sub-area in both the first display area and the second display area.

Following this approach, different sub-areas of an agricultural field may be selected taking into consideration the information provided by the first and second map overlays, allowing an improved interaction for the user in which different field characteristics can be observed for selecting specific sub-areas.

According to a second embodiment, the display unit is further configured to display a value associated to the indicated sub-area of the first characteristic in the first display area and/or a value associated to the indicated sub-area of the second characteristic in the second display area.

Following this approach, different characteristics associated with a specific sub-area of interest can be displayed simultaneously establishing a direct representation of the associated values.

According to a third embodiment, the electronic device is configured to enter an adjustment operation mode and the adjustment operation mode further comprises: the input unit being configured to receive at least one further user input on the indicated sub-area in either one of the first display area and the second display area, the electronic device being configured for rendering active the sub-area for which the at least one further user input is received and modifying the rendered active sub-area based on the at least one further user input, wherein the display unit is configured to indicate the modified sub-area in both the first display area and the second display area.

Following this approach, specific sub-areas can be adjusted based on a first and second characteristics of the agricultural field by direct visual feedback to the user.

According to a fourth embodiment, the electronic device is configured to enter a joint operation mode, wherein the electronic device is configured to receive a plurality of inputs via the input unit for selecting a plurality of sub-areas in at least one of the first display area and the second display area; wherein the display unit is configured to indicate the plurality of selected sub-areas in the first display area and the second display area; receive a first further user input on at least a first sub-area indicated in the first display area or the second display area, receive a second further user input on a second sub-area indicated in the other one of the first display area and second display area, wherein the electronic device is configured to determine a resulting area based on the at least one first sub-area and the at least one second sub-area and indicate the determined resulting sub-area in at least one of the first display area and the second display area.

Following this approach, a sub-area can be directly defined as a combination of specific sub-areas determined according to the at least one first and second characteristics of the field.

According to a fifth embodiment, the map of the agricultural field displayed in the first display area and/or the map of the agricultural field displayed in the second display area and/or the field data for the first map overlay and/or the field data for the second map overlays are from different points in time or from the same point in time.

Following this approach, the time evolution of a specific characteristic and/or the relation between different characteristics can be assessed for the determination of a sub-area.

According to a further embodiment, the first characteristic of the agricultural field and the second characteristic of the agricultural field comprise at least one of a crop type, status or property, a soil type or property, crop yield from previous seasons or an expected crop yield of the current season, waterlogging areas, fertilizer applied to the field or pest occurrences, and past or future weather events.

Following this approach, different agronomic properties of an agricultural field can be taken into consideration.

According to a further embodiment, the input unit configured to receive an input to select at least one sub-area is configured to receive one of a click or tap, a click and hold or tap and hold, drag or lasso input, or a hover input.

Following this approach, different actions of the user can be associated to different actions of the device to increase the operability of the device.

According to a further embodiment, the first characteristic of the agricultural field or the second characteristic of the agricultural field comprises a crop nutrient status, and wherein the selected sub-area determines a measurement region for a crop nutrient measurement device.

Following this approach, a selective analysis of the crop nutrient status can be assessed which allows the determination of relevant sub-areas for carrying out a crop nutrient measurement in order to generate a fertilizer recommendation.

According to a further embodiment, a method for managing agricultural field areas in an electronic device, comprising the steps of receiving field data of the agricultural field; displaying a map of an agricultural field in a first display area and a second display area, wherein the first display area displays a first map overlay comprising a first characteristic of the agricultural field based on the field data, and wherein the second display area displays a second map overlay comprising a second characteristic of the agricultural field based on the field data; displaying at least one first field area in the first display area based on the first characteristic and displaying at least one second field area in the second display area based on the second characteristic; receiving a user input to select a sub-area in the first display area or the second display area; indicating the selected sub-area in both the first display area and the second display area.

According to a further embodiment, indicating the selected sub-area further comprises displaying a value associated to the indicated sub-area of the first characteristic in the first display area and/or displaying a value associated to the indicated sub-area of the second characteristic in the second display area.

According to a further embodiment, the method comprises an adjustment operation mode comprising: - receiving at least one further user input on the indicated sub-area in either one of the first and second display areas, rendering active the selected sub-area for which the at least one further user input is received, modifying the rendered active sub-area based on the at least one further user input, indicating the modified sub-area in both the first display area and the second display area.

According to a further embodiment, the method comprises a joint operation mode comprising receiving a plurality of inputs via an input unit of the electronic device for selecting a plurality of sub-areas in at least one of the first display area and the second display area; indicating the plurality of selected sub-areas in the first display area and the second display area, receiving a first further user input on a first sub-area of the indicated sub-areas in the first display area or the second display area, receiving a second further user input on a second sub-area of the indicated sub-areas in the other one of the first and second display areas, determining a resulting area based on the first sub-area and the second sub-area and indicating the determined resulting area in at least one of the first display area and the second display area.

According to a further embodiment, the first characteristic of the agricultural field and the second characteristic of the agricultural field comprise at least one of a crop type, status or property, a soil type or property, crop yield from previous seasons or an expected crop yield of the current season, presence of water lodged, fertilizer applied to the field or pest occurrences, and past or future weather events.

According to further aspects, a system and a method, a data processing apparatus, a computer-readable storage medium, and a computer program product configured to carry out the above discussed methods are envisaged within the present disclosure.

### Brief description of the figures

The accompanying drawings, which are included to provide a further understanding of the present disclosure and are incorporated in and constitute a part of this specification, illustrate embodiments of the disclosure and together with the description serve to explain the principles of the disclosure.
Figure 1 shows an electronic device according to an embodiment of the present disclosure.
Figures 2a and 2b show an example of an input for selection and indicating a sub-area according to the main embodiment of the present disclosure.
Figures 3a and 3b show an example of the graphical user interface according to an embodiment of the present disclosure.
Figures 4a and 4b show an adjustment mode according to an embodiment of the present disclosure.
Figures 5a and 5b show another adjustment mode according to another embodiment of the present disclosure.
Figures 6a, 6b and 6c show a joint operation mode according to an embodiment of the present disclosure.
Figures 7a, 7b and 7c show another joint operation mode according to another embodiment of the present disclosure.
Figure 8 shows a schematic representation of a system according to the present disclosure

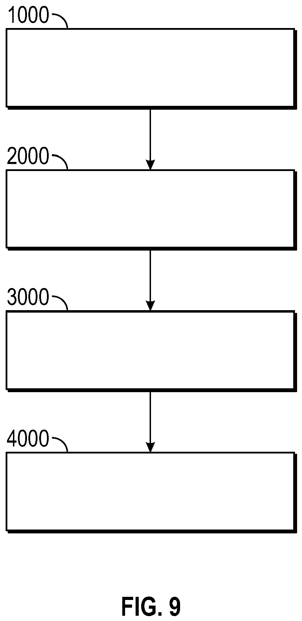

Figure 9 shows a workflow of an embodiment of the present disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

### Detailed Description

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, specifically +/-5% or less, more specifically +/-1% or less, and still more specifically +/-0.1% or less of and from the specified value, insofar such variations are appropriate to perform in the disclosed application. It is to be understood that the value to which the modifier "about" or "approximately" refers is itself also specifically disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure, or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the application, and form different embodiments, as would be understood by those in the art. For example, in the appended claims, any of the claimed embodiments can be used in any combination.

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilised and structural or logical changes may be made without departing from the scope of the present application. The following detailed description, therefore, is not to be taken in a limiting sense, and the scope of the present application is defined by the appended claims.

In the present description, an "electronic device" refers to any kind of electronic equipment suited capable of carrying out logic and/or arithmetic operations with a processing unit comprising at least one processor, a memory unit for transitory and non-transitory storage of data, a communication unit communicatively coupling the different units of the electronic device as well as establishing a wired or wireless communication with external devices. The electronic device further comprises an input (e.g. keyboard, mouse, touch sensitive unit or display) and an output (e.g. a display, a printer) unit for providing an interface with the users. In a further embodiment, the input unit and the display unit are integrally built in the form of a touch-sensitive display. In an embodiment, the electronic device may be represented by a desktop or a mobile computing device, although further embodiments where the specific processes related to processing, handling or representation of data are carried out separately by means of known client-server architectures are as well included within the disclosure of the present application.

In the present description, "field data" may include: identification data (for example, acreage, field name, field identifiers, geographic and topographic identifiers, boundary identifiers, crop identifiers, and any other suitable data that may be used to identify farm land), soil data (for example, type, composition, pH, organic matter (OM), cation exchange capacity (CEC), water holding capacity,...), planting data (for example, planting date, seed(s) type, relative maturity (RM) of planted seed(s), seed population), harvest data (for example, crop type, crop variety, crop rotation, whether the crop is grown organically, harvest date, expected yield, absolute yield or position dependent yield maps, crop price, crop revenue, grain moisture, tillage practice, and previous growing season information), fertilizer data (for example, nutrient type (Nitrogen, Phosphorous, Potassium), application type, application date, amount, application maps for variable application of nutrients, source, crop nutrient content for specific types), pesticide data (for example, pesticide, herbicide, fungicide, other substance or mixture of substances intended for use as a plant regulator, defoliant, or desiccant) and/or irrigation data (for example, application date, amount, source) of present and past seasons.

In the present description, "farm data" may comprise further data regarding to planned or scheduled and past tasks like field maintenance practices and agricultural practices, fertilizer application data, pesticide application data, irrigation data and other field reports as well as historic series of the data from the farm/administrative side, related to administrative details in opposition to field data related to these topics, wherein the imprint in the field is meant for that. Amongst usual data related to this fields are, for example, managing stocks, manpower, available or utilized machinery and so forth, allowing the comparison of the data with past data, and further administrative data like work shifts, logs and other organizational data. Planned and past tasks may comprise activities like surveillance of plants and pests, application of pesticides, fungicides or crop nutrition products, measurements of at least one farm or field parameter, maintenance and repair of ground hardware and other similar activities.

In the present description, external data may comprise weather data (for example, precipitation, temperature, wind, forecast, pressure, visibility, clouds, heat index, sun hours and radiance, dew point, humidity), or data from any other external sensors or weather stations or weather providers.

In the present description, "a map of an agricultural field" refers to data comprising a remote view from a point of view vertically situated over a portion of terrain comprising the agricultural field and a geographical reference of the pixels comprised in said images. These images may display true images of the field or as well usual terrain or orographic representations of the terrain or merely a color-coded representation of features present on the agricultural field.

In the present description, "a map overlay comprising a characteristic of the agricultural field" refers to a graphical representation of a first set of data as present in field data above, wherein the overlay can be configured to represent numerical ranges of data values or sets of discrete characteristics by means of color-coding or any other equivalent representation of field areas which can be explained by means of a legend defining the different ranges. For example, soil data may comprise different sets of data comprising numerical values (e.g. percentage of Organic Matter or relative moisture values) as well as discrete alphanumeric values representing specific attributes (e.g. soil data may refer to soil type and its percentage like 50% Clay, 20% sand and so on).

In the present description, receiving field data may refer to receiving any of the above-mentioned data as introduced by users by means of the user input unit or by retrieval from specific public or private databases or data storage systems by means of the communication unit.

In the present description, "receiving remote image data" may comprise any kind of imagery of the agricultural field obtained by means of cameras or image capturing devices. These image capturing devices may be aerial sensors from satellites or other aerial vehicles, but can be as well mounted on tractors or be stationary, as long as a full coverage of the agricultural field or most of it over the required time span is achieved. Further, in the current disclosure, receiving data may comprise capturing the images but the teachings of the current disclosure comprise as well accessing said data existing from other platforms by means of known network communications or the access of servers or repositories wherein the remote image data may be stored. Image data may refer as well to remote spectral sensing technologies including synthetic aperture (SA) and synthetic aperture radar (SAR), multi-spectral instrument (MSI) or any similar technologies. Amongst the different remote spectral data available for use, different public platforms like LANDSAT, SENTINEL and/or private providers are available to the public.

Remote data is usually pre-processed following standard procedures like normalization, removal of clouds, smoothing and the like which are comprised within the usual practices in the field and included within the scope of the present disclosure.

In the present description "a coefficient indicative of a crop and/or soil status" refers to any coefficient or index indicative of agricultural, soil and/or vegetation information. For example, several indexes have been used widely like the normalized difference vegetation index (NDVI), the soil-adjusted vegetation index (SAVI), the Soil Water Index (SWI) and/or the Bare Soil Index (BSI) and the present disclosure is not limited to a specific coefficient or index.

In the present description, an "agronomic recommendation engine" refers to any computer system or data server architecture configured to generate, access or process any of the data mentioned above. The agronomic recommendation engine following the description of the current disclosure may be an internal or external system, but it may as well be embedded in any agricultural vehicle or machinery. The agronomic recommendation engine may be configured to host, use or execute one or more computer programs or any other software elements or digitally programmed logic to perform the necessary analysis, processing, visualization steps of the current disclosure.

In the present description, a "Graphical User Interface" refers to any computer implemented representation of an interface for allowing the users to operate with an electronic device as comprised within the system of the current disclosure.

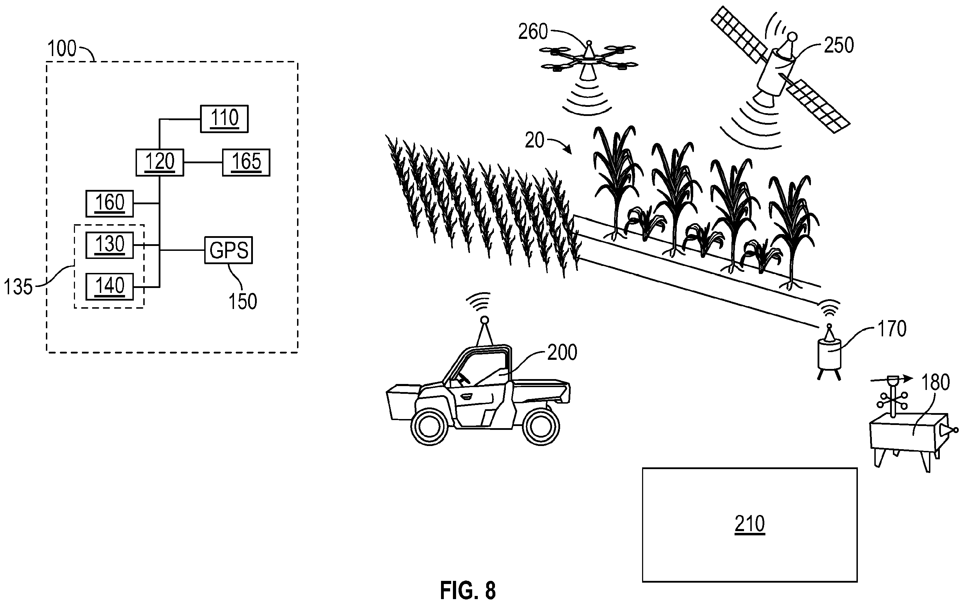

In the main embodiment of the present disclosure, an electronic device is configured to carry out the steps of the corresponding computer-implemented method. As such, according to the main embodiment, the electronic device comprises: a memory unit, at least one processor and an input unit 140 or communication unit 120 configured to received field data; a display unit 130 configured to display at least a first display area and a second display area, wherein the first display area and the second display area are configured to display a map of an agricultural field, wherein the first display area is configured to display a first map overlay comprising a first characteristic of the agricultural field based on the field data, and wherein the second display areas is configured to display second map overlay comprising a second characteristic of an agricultural field based on the field data. An schematic representation of device 100 is to be seen in Figure 8.

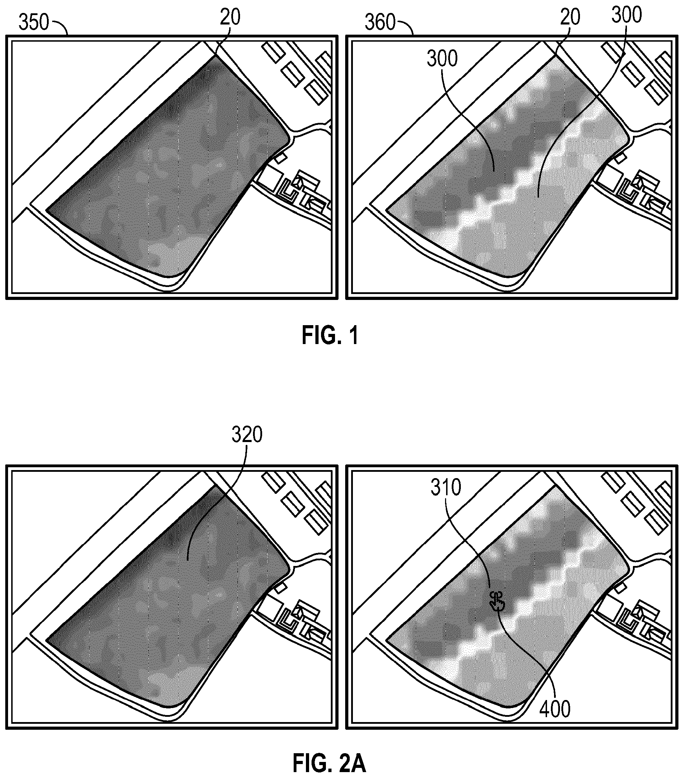

A representation of the display of such a device may be seen in Figure 1, wherein a first display area 350 and a second display area 360 are configured to display 1000 a map of an agricultural field 20, and the first display area is configured to display a first map overlay comprising a first characteristic of the agricultural field 20 based on the field data, and wherein the second display areas is configured to display second map overlay comprising a second characteristic of an agricultural field based on the field data. Figure 1 shows different field areas 300 as defined by the map overlay in the second display area 360, wherein these field areas represent areas of the agricultural field having similar values or same properties according to the specific characteristics shown in the respective map overlay.

While the advantages of having common view points in the first display area and the second display area are clear due to the direct feedback of the first and second characteristics together with the selected and/or indicated sub-areas, it is as well included within the current disclosure that the views may not be exactly the same. For example, different orientations of the maps in the first and second display areas may allow the user to operate the selection of sub-areas as defined below in a more convenient or ergonomic way. Further, different zoom levels may be present in the first and second display area in order to allow the users to carry out a more precise selection of specific sub-areas in a zoomed in view of the agricultural field in one of the display areas while maintaining a general perspective of the agricultural field and of the selected and/or indicated sub-areas at field level without a closer view of the agricultural field in the other one of the display areas.

Following the description of the main embodiment, and as it can be further seen in Figure 2A, the display unit is configured to display 2000 at least one field area 310 in the first display area based on the first characteristic and wherein the display unit is configured to display at least one field area 320 in the second display based on the second characteristic. In the case of Figure 1, two different characteristics may be displayed as claimed, based on different color or pattern-codings representing said field areas 300 having identical or similar alphanumeric values of the displayed characteristics, hereby representing field areas which can be denominated as management zones due to the common characteristic.

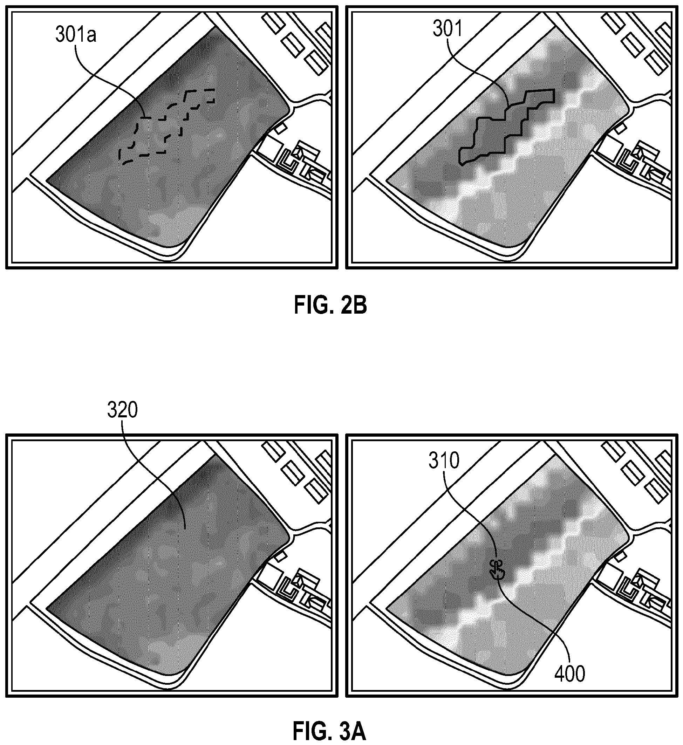

According to the main embodiment, the electronic device 100 further comprises an input unit 140 configured to receive an input 400 to select 3000 at least one sub-area in at least one of the first display area and the second display area, as it can be seen in Figure 2A, and wherein the display unit is further configured to indicate 4000 the at least one sub-area selected in both the first display area and the second display area, as it can be seen in Figure 2B, wherein upon user input 400 in the second display area, the sub-area selected is indicated by means of a continuous black line 301 in the second display area and the same sub-area is indicated in the first display area by means of dashed line 301a.

In the described figures, the selection is made by means of a tap (or a click in case of operating a mouse input unit) or tap-and-hold (click-and-hold correspondingly) and the sub-area selected coincides with one of the already defined field areas defined by the second characteristic displayed in the second display area.

However, the input of the user in the different embodiments of the present disclosure is not limited to such an input and several input actions are included within the present disclosure.

In the described embodiment, when the user selects by means of a tap-and-hold as explained above as sub-area one of the field areas displayed, the selected sub-area having the common characteristic is selected in one go, extending the selection of the sub-area to greatest possible area having said common characteristic, allowing herewith a quick selection procedure for the users.

In other embodiments covered within the main embodiment of the present disclosure, the selection may be carried out by means of a hover input or a single click, wherein a specific pixel or set of contiguous pixels comprising a sub-area of the field (usually, pixel representations of the agricultural fields may comprise areas bigger than 100m² due to the scale of the map) which the user may find of specific interest.

In other embodiments, the selection may be carried out by means of a drag input which can define a lasso tool selecting a specific sub-area across different field areas which the farmers may want to include in the definition of the sub-area. Herewith a fully flexible definition of the sub-areas selected can be achieved.

As such, a sub-area comprises areas of different extensions, from a pixel size to sub-areas comprising different field areas as defined with respect to the field characteristics. In principle, there is no limitation intended within the present disclosure to the size of said sub-areas other than the specific needs of the users as set by the dimensions of their agricultural fields or intended activities.

Further, according to the main embodiment, the sub-area selected by the user is simultaneously indicated in both the first display area and the second display area. In other words, the same (geographical) sub-area of the agricultural field 20 is indicated (e.g., by lines 301 and 301a) at the same time in both the first display area 350 and the second display area 360, even if it was only selected on one of the display areas 350 and 360. Following the conjoint display in the first display area and the second display area of the selected sub-area 301, the user has a direct and unique representation of the selected sub-area and receives direct feedback of the field areas as defined by the second characteristic value corresponding to the selected sub-area.

Following this approach, the users are able of selecting sub-areas within the field according to a double variable analysis of field characteristics, hereby allowing the farmers to increase certainties when managing and/or selecting agricultural areas which can be used for running test trials or define measurement regions to conduct measurements of specific crop and/or soil properties.

Preferably the zoom level of the displayed map of the agricultural field 20 will remain substantially constant before (fig. 2a) and after (fig. 2b) the sub-area is selected/indicated.

According to a further embodiment, the user selecting by means of a drag or by means of a lasso tool includes an intermediate step wherein the drag input is represented in both the first display area and the second display area, to produce direct visual feedback regarding the different characteristics by means of a continuous or a dashed line representing the drag input. Following this approach, the users can modify the drag input to specifically select sub-areas in either one of the first display area and the second display area taking into consideration both the first and the second characteristic as displayed in the first and second display areas.

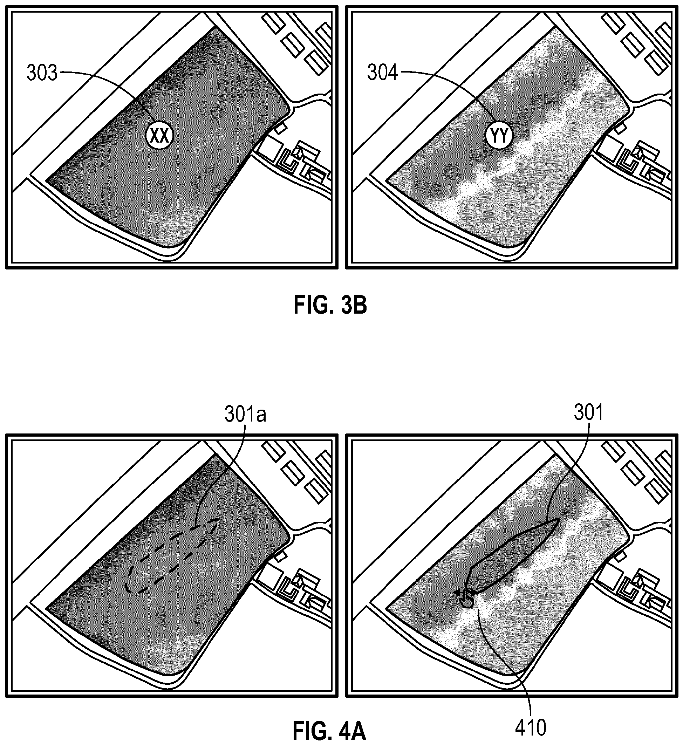

According to a further embodiment, the display unit is further configured to display a value associated to the selected sub-area of the first characteristic in the first display area and/or a value associated to the selected sub-area of the second characteristic in the second display area while indicating the selected sub-area. The current embodiment is described referring to Figures 3a and 3b. In Figure 3a it is an input 400 is to be seen, wherein the input may be as above one of a click, a click-and-hold, a hover and a drag input. The user may herewith select a sub-area 304 which, when indicated in both the first display area and the second display area, the value 303 associated to the sub-area of the respective first characteristic and the value of the second characteristic are displayed as XX and YY. In Figures 3, the corresponding input may be a click wherein a specific sub-area comprising a pixel or a predefined extension defined as minimum within the user preferences, can be selected. In cases where the sub-area may comprise more than one pixel, the displayed values may be averaged values of the corresponding characteristic over the selected sub-area.

According to a further embodiment, the electronic device is further configured to enter and adjustment operation mode comprising the input unit being configured to receive a further user input on at least one of the selected sub-areas in either one of the first display area and the second display area; the electronic device being configured for rendering active one of the at least one sub-areas selected upon user selection and modify the active sub-area based on the at least one further user input, wherein the display unit is configured to display the modification of the active sub-area in both first display area and the second area.

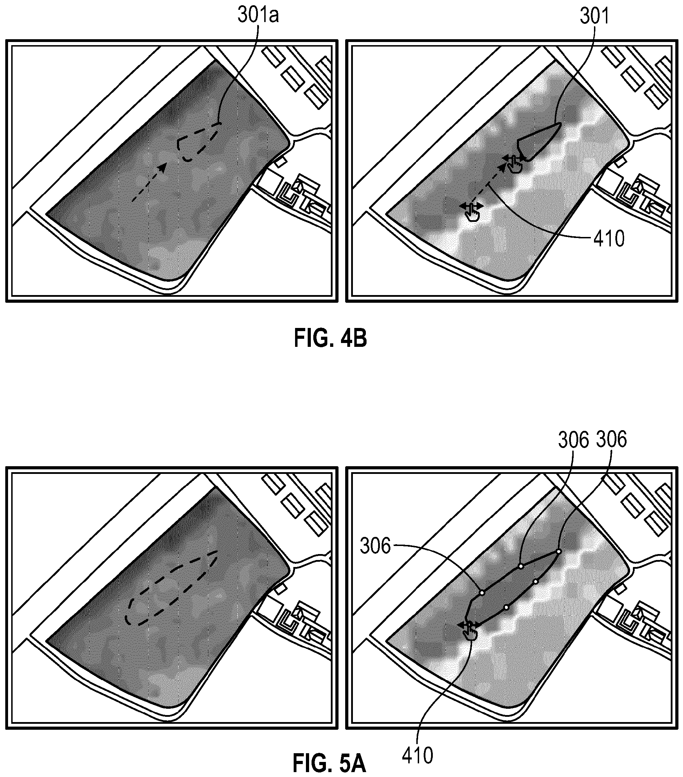

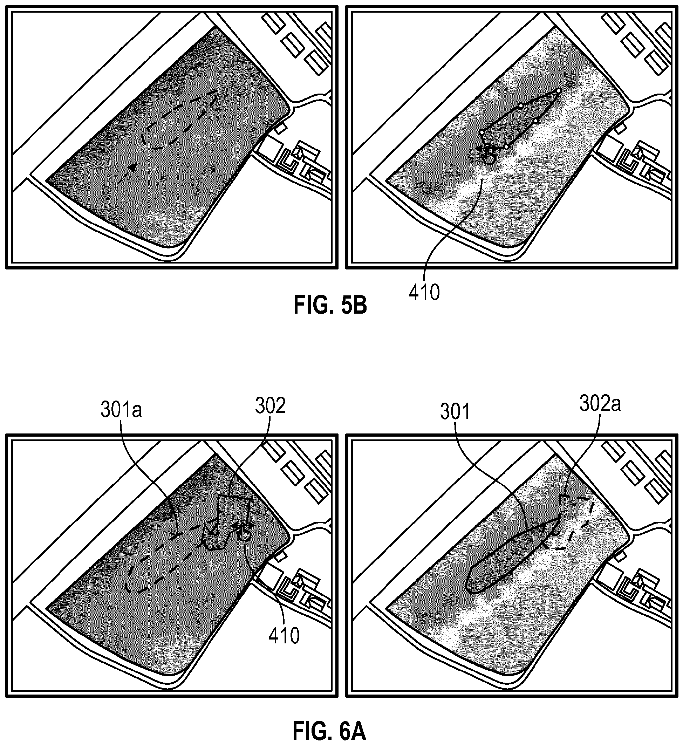

The current embodiment is described together with Figures 4 and 5 depicting two different embodiments as considered within the present disclosure. Following the selection of a first sub-area displayed as 301 and 301a in both display areas, as previously seen in Figures 2, the users are able of modifying the selected areas by means of a further user input 410. The users may select different adjustment modes of the selected sub-area according to their intended modifications. For example, in an embodiment as seen in Figure 4b, the user input 410 may comprise a drag or click-and-drag resulting in a section of the sub-area or a scaling based on the trajectory of the user input 410. Although performed (by the user) only in one of the display areas/on line 301, the modification of the sub-area will automatically carry over to the corresponding sub-area indicated by line 301a in the other display area, as shown in Figure 4b.

In another embodiment as depicted in Figure 5a, the display unit is configured to display a plurality of anchor points or nodes 306 in the perimeter of the selected sub-area. The user may accordingly select one of these anchor points 306 by means of an input 410 and modify a specific sector of the perimeter of the sub-area, hereby considering both the field areas as defined by the first characteristic in the first display part and the second characteristic in the second display area.

These anchor-points can be automatically generated with the generation of the sub-area or upon user input, for example double-clicking the selected area or specific area perimeter, so that the selected sub-area can be modified best according to the first and second characteristic of the agricultural field. Following this approach, the modification of the sub-area can be generated according to specific constraints as set by the first characteristic as displayed in the first display part and the second characteristic displayed in the second display part.

In a further embodiment, the anchor points are determined based on the limits of the field areas of the first and/or second areas as defined by the first and second characteristics. Following this approach, the needed flexibility is allowed around the specific points of the sub-areas which coincide with field area changes.

In a further embodiment, the electronic device is configured to enter a joint operation mode, wherein the electronic device is configured to receive a plurality of inputs via the input unit for selecting a plurality of sub-areas in at least one of the first display area and the second display area; wherein the display unit is configured to indicate the plurality of selected sub-areas in the first display area and the second display area; receive a first further user input on at least a first sub-area indicated in the first display area or the second display area, receive a second further user input on a second sub-area indicated in the other one of the first display area and second display area, wherein the electronic device is configured to determine a resulting area based on the at least one first sub-area and the at least one second sub-area and indicate the determined resulting sub-area in at least one of the first display area and the second display area.

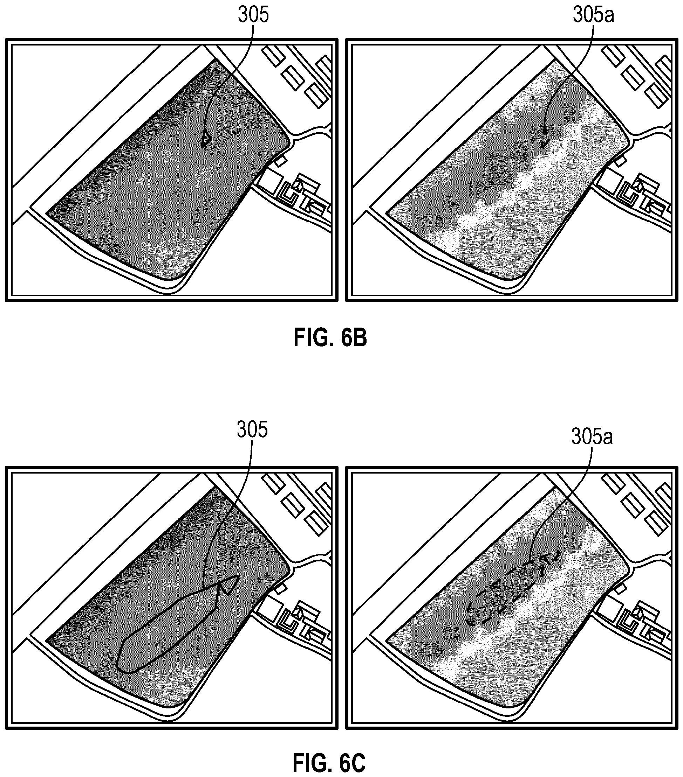

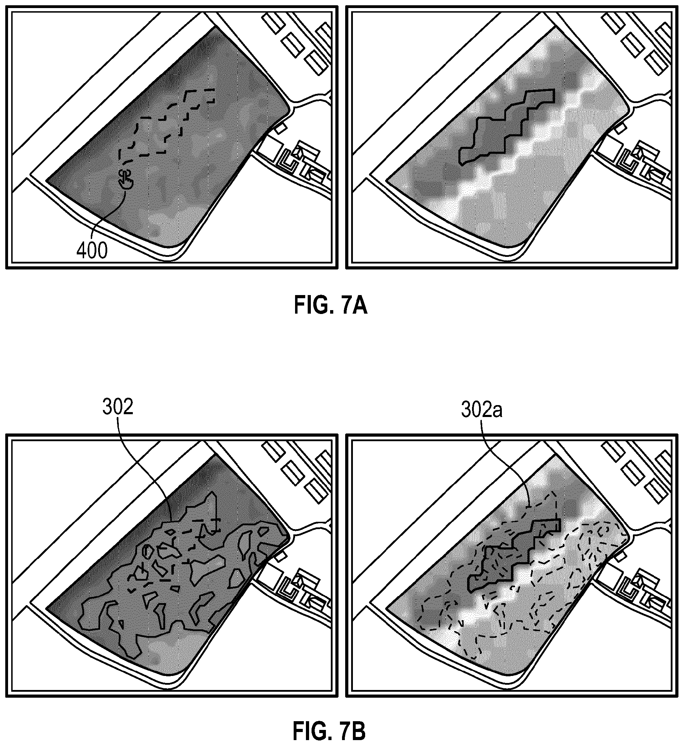

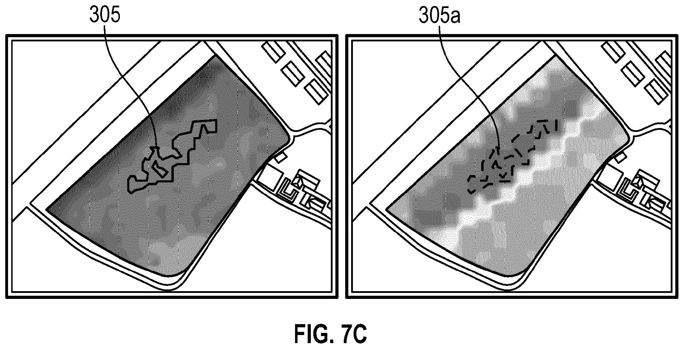

The current embodiment is described together with Figures 6 and 7. Figure 6a illustrates the moment in which upon the selection of a first sub-area, indicated by 301 in the second display area and as 301a in the first display area, the user selects a second sub-area in the first display area by means of a user input 410 according to the previous embodiments, which is displayed correspondingly as 302 in the first display area and as 302a in the second display area, and the user may provide further user inputs to select amongst the plurality of indicated sub-areas a predetermined number of them, upon which the electronic device is configured to determine a resulting area derived from the selected sub-areas. For example, the resulting area may be selected amongst one of: a union combination of the at least one first sub-area and the at least one second sub-area; an intersection combination of the respective first and second sub-areas as displayed in Figure 6b; an exclusion combination of the second sub-area with respect to the first sub-area as displayed in Figure 6c or the contrary, wherein the resulting area is the second sub-area excluding the common area belonging to the first sub-area and the second sub-area. The resulting sub-area is then displayed in the first display area as 305 and as 305a in the second display area as depicted in Figures 6b and 6c. Figures 7a-c show equivalent representations of such a joint operation mode when the plurality of selected sub-areas area selected according to other embodiments as above described, which advantages will be made clear below with further advantageous embodiments.

According to a further embodiment, the agricultural map and/or the field data for the first map overlay as well as the agricultural map and/or the field data for the second map overlay are from different points in time or from the same point in time. As it will be further discussed below, for specific cases it might be of advantage to display, for example in the first display area, an agricultural map together with a first characteristic of concurrent in time (for example, representation of a current status of the field as it may be displayed in the image of the agricultural map together with a current moisture level of the soil as a first characteristic), while for observing different parameters (for example for nutrient removal considerations yield and specific nutrient values may be of advantage), the yield data from at least a prior crop or averaged over a plurality of prior crops superposed with the current map image of the agricultural field is of advantage for finding areas where the specific nutrients might be lacking and either an observation or measurement in said areas is intended for determining the specific action to be taken. Correspondingly, the second display area may display a map of the agricultural field from different points in time or from the same point in time as the map and/or the first map overlay as displayed in the first display area, as well as the second map overlay, which may correspondingly be from the same point in time or from different point in times than the respective elements of the first display area. Together with the map of the agricultural field displayed in the first display area and the selected map overlay, different combinations which will be described below can be considered and herewith included in the determination of a specific sub-area and the resulting sub-areas.

According to a further embodiment, the first characteristic of the agricultural field and the second characteristic of the agricultural field comprise at least one of a crop type, health or nutrient status or crop property, a soil type or property like soil moisture, soil organic matter content or soil water holding capacity; crop yield from previous seasons or an expected crop yield of the current season, a grain protein map of the agricultural field, waterlogging areas within the agricultural field, fertilizer applied to the field in prior applications or pest occurrences, and past or future weather events. Moreover, user-defined areas which determine areas to be shown as a map overlay are comprised within the present disclosure. The farmers, when combining different map overlays may generate their own ones with added categories of field areas where specific actions shall or shall not be conducted. For example, upon a visit to the field, the users might define areas which suffer from water ponding in the current season. These areas, depending on the yearly weather trends, may be excluded from planting and/or fertilization since its use would only be below average at best. The farmers might as well only be interested in analyzing specific areas after a fertilizer application or any other treatment has been applied, which could be presented as a further map overlay so that the farmers can, upon exercising the current method, have the information displayed together with the further second map overlay, based on both

According to a further embodiment, managing agricultural field areas may comprise determining areas which are convenient for managing the irrigation of the agricultural field. In this embodiment, the system may be configured to display a first map overlay comprising biomass information from the planted crops or planting data in the first display area and a soil water holding capacity map overlay in the second display area (or vice versa) which allows the farmer to determine areas with a greater biomass where the water holding capacity of the soil is minimum. These points determine the critical moisture points in an agricultural field and determining a sub-area based on the intersection of these specific areas can be used as measurement regions for crop or soil moisture measurement devices which warn the users when the water critical spots have reached a specific moisture level. As such, by managing agricultural field areas according to the following embodiment, the system may determine measurement regions for a soil or crop moisture device.

According to a further embodiment, managing agricultural field areas may comprise determining areas which are convenient for carrying out soil analysis, whether by using a specific soil sampling device or by collecting samples which can be analyzed in the laboratory at a later moment. In this embodiment, the system may be configured to display a first map overlay comprising a yield map from the prior crop season as a first map overlay in the first display area and a grain protein map as a second map overlay in the second display area. By determining areas wherein the yield data and the protein map have bigger values, a Nitrogen use efficiency of specific areas can be determined in case of blanket fertilizer applications. Accordingly, areas where the Nitrogen use efficiency are lowest can be determined by selecting areas of lower protein values and/or lower yield. The system may then be further configured to determine measurement regions for soil sampling in at least one of the higher and lower nitrogen use efficiency sub-areas, the farmers can carry out the needed practices (e.g. adapting fertilizer recommendations, using cover crops over the winter and so on).

According to a further embodiment, managing agricultural field areas may comprise determining areas which are convenient for carrying out harvesting operations. In this embodiment, the system may be configured to display a first map overlay comprising a crop grain moisture map in the first display area and to display a first map overlay comprising a protein map of the agricultural field in the second display area. Upon combination of lower crop grain moisture sub-areas with sub-areas wherein the protein is within a predetermined range, the farmers may determine sub-areas ready to be harvested and schedule a harvesting operation.

According to a further embodiment, managing agricultural field areas may comprise determining areas which are convenient for carrying out crop and/or soil nutrient measurements. In this embodiment, the system may be configured to display a first map overlay comprising a crop nutrient distribution in the agricultural field in the first display area. These maps may be generated from available field data or by means of remote sensing as disclosed in the patent application PCT/EP2022/056462 which is hereby incorporated by reference. The system may be configured to display a second map overlay in the second display area, wherein the maps may be selected amongst the plurality of yield data, soil type data and the like. The users may then select sub-areas by combining areas of the first map overlay where the crop nutrient is comprised within a specific range (for example average crop nutrient status) or a first sub-area where the crop nutrient status is within a first predetermined range and a first sub-area where the crop nutrient status is within a second predetermined range. Further, the users may select sub-areas wherein the yield is within a predetermined range of the average yield values of the field. As such, the device may be configured to determine a measurement region for a crop nutrient sensor as selected or resulting sub-area or sub-areas, so that the farmers can carry out measurements at relevant sub-areas of the agricultural field.

It is clear that within any of the above-mentioned embodiments, the system may be configured to, upon determination of a sub-area, display a further map overlay in at least one of the first and second display area while the other display area still indicates the selected sub-areas. By iteratively display further map overlays which further refine the selection and determination of the desired sub-areas, the users are able of incorporating data from other characteristics of the agricultural field which might be relevant to the specific management planned for the selected sub-area. While not further described in the current application, it is clear that the current embodiment may be carried out by providing a further display area or by allowing the modification of the map overlay within one of the first display area and the second display area, hereby keeping the selected and/or indicated areas such that the user in an iterative way can further determine and/or adapt the sub-areas in successive steps.

According to a further embodiment, the device may be configured to determine a placement region for an irrigation scheduling device or tensiometer in the selected or resulting sub-area.

According to a further embodiment, the device may be configured to determine a region for an agricultural measure, wherein the agricultural measure may be at least one of: a watering operation, cultivating or analyzing the soil (e.g. measuring soil moisture or other soil properties), application of seeds, treatment with one or a plurality of plant protection agents, application of nutrients, and harvesting.

According to a further embodiment, the device may be operatively connected with further systems present in farms or agricultural fields. Figure 8 shows an schematic view of an environment wherein the device 100 of the current disclosure may be employed. Device 100, besides the above-defined features, may further be operatively connected to an agricultural apparatus 200. Examples of agricultural apparatus 200 include tractors, combines, harvesters, planters, trucks, fertilizer equipment, and any other item of physical machinery or hardware, typically mobile machinery, and which may be used in tasks associated with agriculture. In one embodiment, system 100 may be configured to communicate with the agricultural apparatus 200 by means of wireless networks in order carry out the intended agricultural measure. System 100 may be further configured to produce a downloadable script file for the agricultural apparatus to carry out the agricultural measure. For example, agricultural apparatus may be a spreader configured to carry out a fertilizer application or at least one of the following: a watering operation, cultivating or analyzing the soil, application of seeds, treatment with one or a plurality of plant protection agents, application of nutrients, and harvesting.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein.

An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product.

While the foregoing describes various embodiments of the disclosure, other and further embodiments of the disclosure may be devised without departing from the basic scope thereof. The scope of the disclosure is determined by the claims that follow.

The disclosure is not limited to the described embodiments, versions or examples, which are included to enable a person having ordinary skill in the art to make and use the disclosure when combined with information and knowledge available to the person having ordinary skill in the art.

### Reference Signs:

- 10: Farm
- 20: Agricultural Field
- 30: Farmers Location
- 100: System
- 120: Communications Unit
- 130: Display Unit
- 135: Touch Sensitive Display
- 140: Input Unit
- 150: Crop/Farm Sensors
- 180: Weather Station
- 200: Agricultural Apparatus
- 210: Agricultural recommendation engine
- 300: Field area
- 301: First sub-area
- 302: Second sub area
- 303: Sub-area first characteristic value
- 304: Sub-area second characteristic value
- 305: Resulting management zone
- 306: Anchor points or selection marks
- 310: First representative area
- 320: Second representative area
- 350: Left display area
- 360: Right display area
- 400: Tap
- 410: Drag or swipe

## Claims

1. An electronic device for managing agricultural field areas, wherein the electronic device comprises:
- a memory unit;
- at least one processor;
- an input unit or communication unit configured to receive field data and;
- a display unit being configured to display at least a first display area and a second display area, wherein the first display area and the second display area are configured to display a map of an agricultural field, wherein the first display area is configured to display a first map overlay comprising a first characteristic of the agricultural field based on the field data, and wherein the second display areas is configured to display second map overlay comprising a second characteristic of the agricultural field based on the field data;
- wherein the display unit is configured to display at least one field area in the first display area based on the first characteristic and wherein the display unit is configured to display at least one field area in the second display based on the second characteristic;
- an input unit configured to receive an input to select at least one sub-area in one of the first display area and the second display area;
- wherein the display unit is further configured to indicate the selected at least one sub-area in both the first display area and the second display area.

2. An electronic device according to claim 1, wherein the display unit is further configured to display a value associated to the indicated sub-area of the first characteristic in the first display area and/or a value associated to the indicated sub-area of the second characteristic in the second display area.

3. An electronic device according to claim 1 or 2, wherein the electronic device is configured to enter an adjustment operation mode and the adjustment operation mode further comprises:
- the input unit being configured to receive at least one further user input on the indicated sub-area in either one of the first display area and the second display area,
- the electronic device being configured for rendering active the sub-area for which the at least one further user input is received and modifying the rendered active sub-area based on the at least one further user input,
- wherein the display unit is configured to indicate the modified sub-area in both the first display area and the second display area.

4. An electronic device according to any one of claims 1 to 3, wherein the electronic device is configured to enter a joint operation mode, wherein the electronic device is configured to:
- receive a plurality of inputs via the input unit for selecting a plurality of sub-areas in at least one of the first display area and the second display area;
- wherein the display unit is configured to indicate the plurality of selected sub-areas in the first display area and the second display area;
- receive a first further user input on at least a first sub-area indicated in the first display area or the second display area,
- receive a second further user input on a second sub-area indicated in the other one of the first display area and second display area,
- wherein the electronic device is configured to determine a resulting area based on the at least one first sub-area and the at least one second sub-area and indicate the determined resulting sub-area in at least one of the first display area and the second display area.

5. An electronic device according to any one of the preceding claims, wherein the map of the agricultural field displayed in the first display area and/or the map of the agricultural field displayed in the second display area and/or the field data for the first map overlay and/or the field data for the second map overlays are from different points in time or from the same point in time.

6. An electronic device according to any one of the preceding claims, wherein the first characteristic of the agricultural field and the second characteristic of the agricultural field comprise at least one of a crop type, status or property, a soil type or property, crop yield from previous seasons or an expected crop yield of the current season, waterlogging areas, fertilizer applied to the field or pest occurrences, and past or future weather events.

7. An electronic device according to any one of the preceding claims, wherein the input unit configured to receive an input to select at least one sub-area is configured to receive one of a click or tap, a click and hold or tap and hold, drag or lasso input, or a hover input.

8. An electronic device according to any one of the preceding claims, wherein the first characteristic of the agricultural field or the second characteristic of the agricultural field comprises a crop nutrient status, and wherein the selected sub-area determines a measurement region for a crop nutrient measurement device.

9. A method for managing agricultural field areas in an electronic device, comprising the steps of:
- receiving field data of the agricultural field;
- displaying a map of an agricultural field in a first display area and a second display area, wherein the first display area displays a first map overlay comprising a first characteristic of the agricultural field based on the field data, and wherein the second display area displays a second map overlay comprising a second characteristic of the agricultural field based on the field data;
- displaying at least one first field area in the first display area based on the first characteristic and displaying at least one second field area in the second display area based on the second characteristic;
- receiving a user input to select a sub-area in the first display area or the second display area;
- indicating the selected sub-area in both the first display area and the second display area.

10. A method according to claim 9, wherein indicating the selected sub-area further comprises displaying a value associated to the indicated sub-area of the first characteristic in the first display area and/or displaying a value associated to the indicated sub-area of the second characteristic in the second display area.

11. A method according to claim 9 or 10, wherein the method comprises an adjustment operation mode comprising:
- receiving at least one further user input on the indicated sub-area in either one of the first and second display areas,
- rendering active the selected sub-area for which the at least one further user input is received,
- modifying the rendered active sub-area based on the at least one further user input,
- indicating the modified sub-area in both the first display area and the second display area.

12. A method according to any one of the claims 9 to 11, wherein the method comprises a joint operation mode comprising:
- receiving a plurality of inputs via an input unit of the electronic device for selecting a plurality of sub-areas in at least one of the first display area and the second display area;
- indicating the plurality of selected sub-areas in the first display area and the second display area,
- receiving a first further user input on a first sub-area of the indicated sub-areas in the first display area or the second display area,
- receiving a second further user input on a second sub-area of the indicated sub-areas in the other one of the first and second display areas,
- determining a resulting area based on the first sub-area and the second sub-area; and
- indicating the determined resulting area in at least one of the first display area and the second display area.

13. A method according to any one of the claims 9 to 13, wherein the first characteristic of the agricultural field and the second characteristic of the agricultural field comprise at least one of a crop type, status or property, a soil type or property, crop yield from previous seasons or an expected crop yield of the current season, presence of water lodged, fertilizer applied to the field or pest occurrences, and past or future weather events.

14. A computer-readable storage medium comprising instructions which, when executed by a computer system, cause the computer system to carry out the method of any one of the claims 9 to 13.

15. A computer program product comprising instructions which, when the program is executed by a computer system, cause the computer system to carry out the method of any one of the claims 9 to 13.
